# EUROPEAN PATENT SPECIFICATION

(11) **EP 3 897 296 B1**
(45) Date of publication and mention of the grant of the patent: **12.06.2024**
(21) Application number: 19900617.2
(22) Date of filing: 20.12.2019
(51) Int. Cl.: A47B 88/90, F16B 12/20, A47B 96/20, F16B 12/46, E05D 1/02

(54) **PRE-MOUNTED FURNITURE MODULE**
VORMONTIERTES MÖBELMODUL
MODULE DE MEUBLE PRÉFABRIQUÉ

(30) Priority: 20.12.2018 SE 1851624
(43) Date of publication of application: 27.10.2021
(73) Proprietor: Inter IKEA Systems B.V., 2616 LN Delft (NL)
(72) Inventor: ARVIDSSON, Tobias, 246 34 Löddeköpinge (SE)
(74) Representative: Ström & Gulliksson AB
(86) International application number: PCT/SE2019/051334
(87) International publication number: WO 2020/130928

(56) References cited:
- EP-B1- 0 423 596
- WO-A1-2006/107220
- DE-A1- 3 138 380
- FR-A- 1 596 837
- GB-A- 994 528
- GB-A- 1 274 994
- GB-A- 2 209 062
- US-A- 4 057 308

## Description

### Technical Field

The present invention relates to a pre-mounted furniture module, in particular to an erectable structure being designed to form part of a drawer, a box, or other piece of furniture.

### Background

In order to facilitate the assembly of furniture it has been suggested to provide some parts of the furniture as pre-mounted structures, or furniture modules. Especially when assembly is performed by the customer, the provision of such pre-mounted modules does not only assist the customer to experience a more easy and less time consuming assembly process, but it also ensures correct positioning of the furniture parts.

In WO2018/004418, by the same applicant, it is suggested to use an adhesive as a hinge connection between a first panel and a second panel in order to provide the first and second panels as a pre-mounted furniture module. The panels are folded relative each other by 270°, which means that they are arranged onto each other in a flat and planar configuration during transport and storing, whereby unfolding the panels by 270° will result in the first and second panels forming a perpendicular corner shape.

Although the proposed solution provides a number of advantages compared to what has been suggested before, there is still room for improvement. For example, the adhesive must be very strong and robust in order to form a rigid connection between the panels, while at the same time it should be flexible enough to allow folding/unfolding. In view of these quite contradictory requirements, there is a need for an improved solution for pre-mounted furniture modules.

FR 1 596 837 A discloses a furniture module known in the art.

### Summary

An object of the present invention is to provide an improved pre-mounted furniture model forming part of a piece of furniture. This object is achieved by a solution defined in the appended independent claims, certain embodiments being set forth in the related dependent claims.

An idea of the present invention is to use a separate hinge member which is attached to both panels of the furniture module, which not only allows for the ability to fold the panels but also form a robust and rigid connection between the panels, when in the corner-shape position.

According to the invention, there is a provided a furniture module for forming part of a piece of furniture. The furniture module comprises a first panel, a second panel, and at least one hinge member having at least one connection element, whereby the hinge member is arranged to be attached to at least one of the panels by means of said connection element. The hinge element is configured to allow the first and second panels to be folded relative each other by 250-270°, such as approximately 270°, between a folded, and flat, shape, and an erected corner shape, and wherein chamfered folding sides of the panels come into contact with each other, thereby forming a perpendicular configuration of the panels. Preferably, the hinge member is arranged on the exterior side of the corner shape.

In an embodiment, the at least one connection element comprises a first connection element for attaching the hinge member to the first panel, and a second connection element for attaching the hinge member to the second panel. This is advantageous in that the hinge member may be initially manufactured as a separate component, while the panels can be standard panels.

The first and second connection elements may be identical, which provides for a simple hinge member.

The connection element may comprise a dowel to be pressed into a mating recess of the panel. This facilitates connection of the hinge member to the panel(s).

The connection element may comprise a cylindrical part to be positioned into a mating recess of the panel, which cylindrical part being radially expandable. The connection element may for such embodiment further comprise a pin being configured to be inserted into said cylindrical part in order to radially expand said cylindrical part. Robust attachment of the hinge member to the panel(s) is thereby achieved.

The hinge member may comprise a first rotational axis by which the hinge member is rotated in order to position the furniture module in the erected corner shape. By having a well-defined rotational axis, correct folding and positioning of the panels is achieved.

The hinge member may be arranged to connect the panels such that a folding side of the first panel is arrangeable adjacent to a folding side of the second panel, and wherein the first rotational axis is arrangeable in parallel with the folding sides of the panels at a position where the folding sides meet. A very distinct corner shape may thus be achieved.

With the provision of chamfer on each folding side, an increased contact area between the folding sides is provided when the module is arranged in the corner shape.

The chamfered folding sides may be provided with a support means, in order to provide for a more robust and stable corner shape.

The hinge member may comprise a second rotational axis arranged in parallel, but spaced apart, from the first rotational axis. This allows for additional folding capabilities of the panels.

The second rotational axis may be arranged in between the connection element and the first rotational axis, whereby the relative position of the panels can be shifted in the planar shape.

The hinge member may comprise a first pivot part extending between the first and second rotational axis, which first pivot part is allowed to pivot relative the first panel. It is thereby possible to fold the panels into the planar shape, and at the same time allowing for a vertical distance between the panels, which vertical distance corresponds to the length of the pivot part.

The hinge member may further comprise a third rotational axis arranged in parallel, but spaced apart, from the first rotational axis, and on an opposite side of the first rotational axis than the second rotational axis.

The hinge member may comprise a second pivot part extending between the first and third rotational axis, which second pivot part is allowed to pivot relative the second panel. The vertical distance can thereby be increased to the total length of the first and second pivot part.

The hinge member may be made of plastic, which provides for a simple and cost-effective component.

The furniture module may comprise at least two hinge members connecting the first panel to the second panel. The furniture module can thus be very robust, even if each hinge member is relatively small.

The furniture module may further comprise a third panel, and at least one hinge member connecting said third panel to the first panel or the second panel. Hence, the furniture module may form a U-shape which can be used to form part of a lot of different pieces of furniture.

The first panel may be a back panel of a drawer, and the second panel may be a side panel of the drawer.

According to a preferred embodiment of the invention, a piece of furniture, such as a drawer is provided. The piece of furniture comprises a furniture module mentioned above.

### Brief Description of the Drawings

Embodiments of the invention will be described in the following, reference being made to the appended drawings which illustrate non-limiting examples of how the inventive concept can be reduced into practice.
Fig. 1 is an isometric view of a chest of drawers with a number of drawers according to an embodiment of the invention;
Fig. 2 is an isometric view of a drawer, being formed by a pre-mounted furniture module according to an embodiment;
Fig. 3 is a side view of a furniture module according to an embodiment, in an intermediate position;
Fig. 4 is a side view of the furniture module shown in Fig. 3, in a folded, or corner-shape, position;
Fig. 5a is a side view of the furniture module shown in Fig. 3, in an unfolded, or flat, position;
Fig. 5b is a side view of the furniture module shown in Fig. 3, in another unfolded, or flat, position;
Fig. 6a-b are isometric views of a hinge member, forming part of a furniture module according to an embodiment;
Fig. 6c is an isometric view of a pin for use with the hinge member shown in Figs. 6a-b;
Fig. 7 is a front view of a furniture module according to an embodiment;
Fig. 8a is a side view of a furniture module according to an embodiment;
Fig. 8b is a side view of a furniture module according to another embodiment; and
Fig. 8c is a side view of a furniture module according to a yet further embodiment.

### Detailed Description

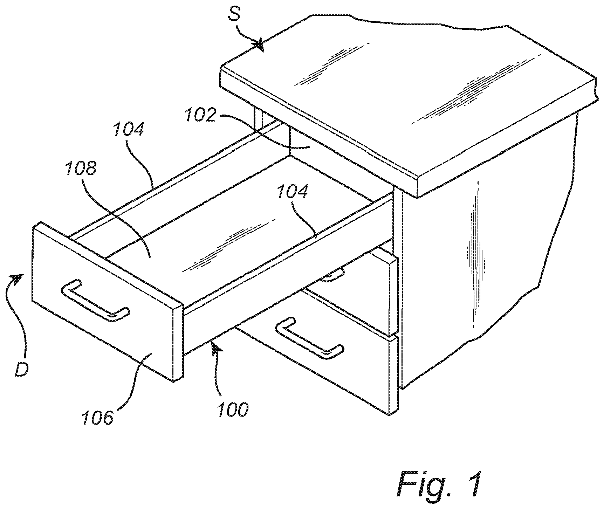

With reference to the drawings there is provided a piece of furniture, such as a drawer, a box, a cabinet, or the like.. In one embodiment a furniture module 100 forms part of a drawer D being slidably supported by means of a chest of drawers S (see Fig. 1). However it should be realized that the furniture module 100 is by no means assumed to be limited to only this application but is instead applicable for other pieces of furniture such as shelf systems, cabinets, tables, side boards, etc.

As can be seen in Fig. 1 the furniture module 100 comprises a first panel 102, forming the back piece of the drawer D, and two panels 104 connected to opposite sides of the back panel 102. A front panel 106 and a bottom panel 108 may also be connected to the furniture module 100 in order to form a complete drawer D, as well as guiding rails for enabling a sliding movement of the drawer D relative the chest of drawers S.

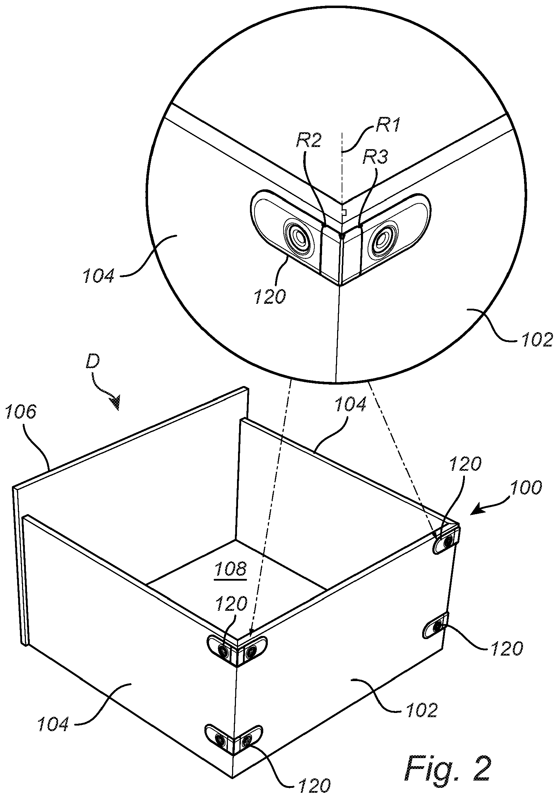

In Fig. 2 the drawer D is shown in more details, especially with regards to the furniture module 100. As can be seen from the rear side of the drawer D, the side panels 104 are connected to the back panel 102 by means of several identical hinge members 120. The hinge members 120 do not only provide a rigidity and robustness of the furniture module 100, but also allow the furniture module 100 to be folded as will be explained below.

Preferably, a piece of furniture such as the drawer D is assembled by the customer; it is stored and bought in a non-assembled state, and the customer will build the drawer by erecting the pre-mounted furniture module 100 such that the side panels 102 and the back panel 102 together exhibit their final U-shape, and subsequent attachment of the front panel 106 and the bottom panel 108 to the erected furniture module 100.

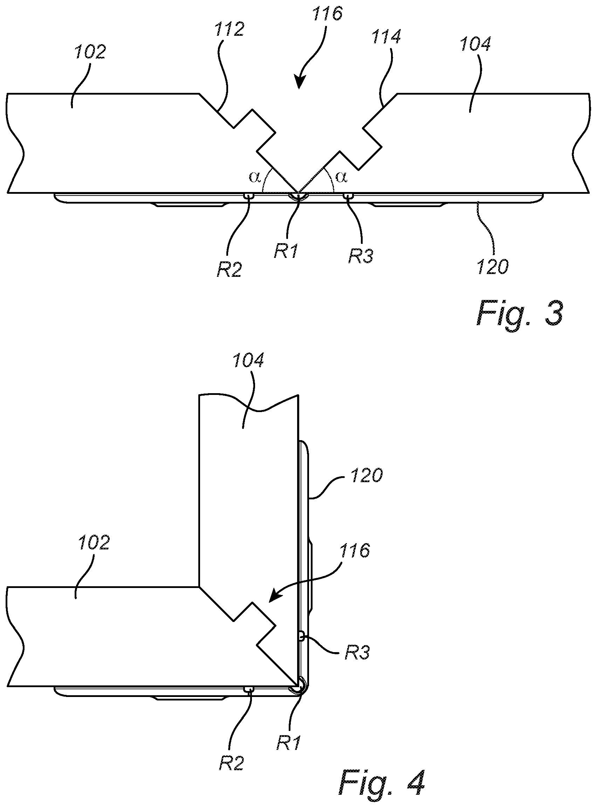

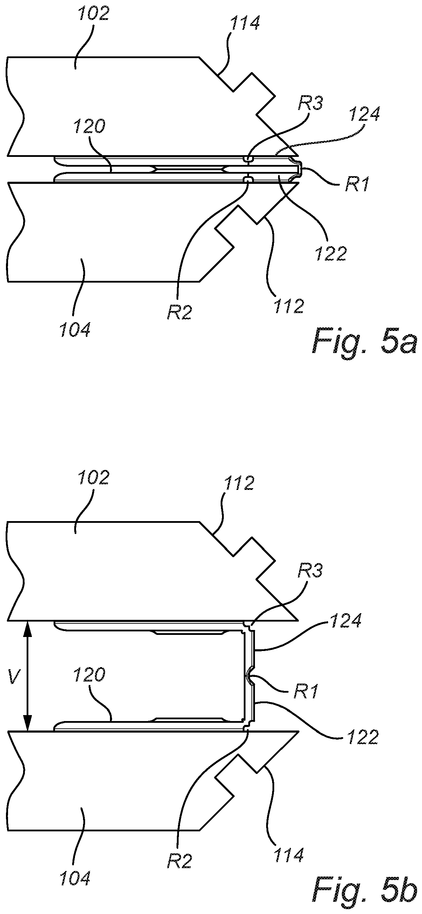

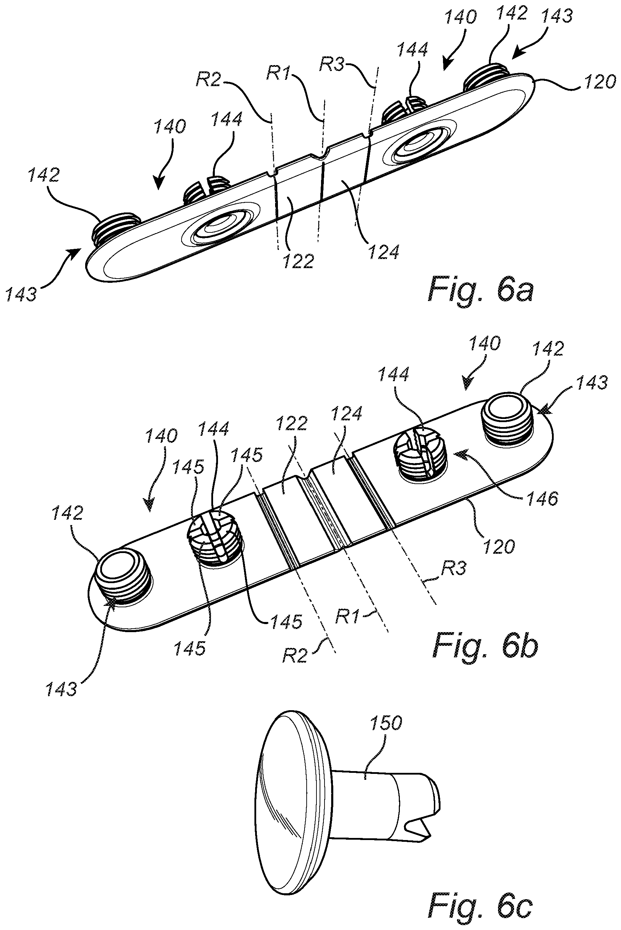

The connection between two panels 102, 104 is further shown in Figs. 3, 4, and 5a-b, all figures showing cross-sectional views of the furniture module 100 in different positions. Starting in Fig. 3, a first panel 102 (such as the back panel) is horizontally aligned with a second panel 104 (such as a side panel). Attachment of the two panels 102, 104 to each other is accomplished by one or more hinge members 120. The hinge member 120 is provided with at least one connection element 140 (see Figs. 6a-c) which provides for the connection of the panels 102, 104 to the hinge member 120. As can be seen in Fig. 3, the hinge member 120 can be folded by means of the folding line, or rotational axis R1. The rotational axis R1, which is also indicated in the enlarged section of Fig. 2, is arranged in between the first panel 102 and the second panel 104, and can be used to fold the panels 102, 104 relative in each other in both directions; towards an erected position, as is shown in Fig. 4, and towards a folded position, as is shown in Figs. 5a-b.

In order to allow for a corner shape, as is shown in Fig. 4, the first panel 102 is provided with a chamfered folding side 112, which is aligned with a chamfered folding side 114 of the second panel 104. Preferably, each folding side 112, 114 is chamfered by an angle α of 45°. The folding sides 112, 114 are further provided with a support means 116, in order to further strengthen the connection between the panels 102, 104 when folded into the corner shape of Fig. 4.

The support means 116 is formed by a protrusion 116a on the first folding side 112, and a mating recess 116b on the second folding side 114. When the panels 102, 104 are folded, the protrusion 116a will enter the recess 116b and form a support for the panels 102, 104. The support means 116 assists in ensuring the correct position of the panels 102, 104 in the corner shape; additional panels 106, 108 or other furniture components can later be used to create the required robustness of the furniture module 100.

The corner shape of the furniture module 100 is shown in Fig. 4. The hinge member 120 is folded along the rotational axis R1 such that the chamfered folding sides 112, 114 of the panels 102, 104 come into contact with each other, thereby forming a perpendicular configuration of the panels 102, 104. The folding line, forming the rotational axis R1, may e.g. be formed as a local weakening of the material of the hinge member 120, or any other structure causing a deformation of the hinge member 120 to occur at the intended position, i.e. at the rotational axis R1.

During storing and transport, it is desired to allow the panels 102, 104 to overlap such that the package size can be reduced. The hinge member 120 thereby configured to allow the first and second panels 102, 104 to be folded relative each other by approximately 270° between a folded, and flat shape (see Figs. 5a-b), and an erected corner shape (see Fig. 4).

It should be understood that within the context of the present application, the expression "approximately 270°" is to be interpreted broadly to cover an angular interval suitable to change a relative position between two planar panels 102, 104; from a corner shape position where the hinge member 120 is arranged on the exterior side of the corner, to a position where the panels 102, 104 are arranged on top of each other and where the hinge member 120 is arranged between the panels 102, 104. The stacked positon must not be entirely planar, but the panels 102, 104 may be allowed to be arranged relative each other at a small angle. Hence, "approximately 270°" may correspond to an interval of 250-270°, or similar.

Two available configurations are shown in Figs. 5a-b. In Fig. 5a, the hinge member 120 is folded along the rotational axis R1, but in the opposite direction such that the second panel 104 is arranged in parallel with the first panel 102, in an overlapping manner. As the hinge member 120 is folded along the rotational axis R1, the panels 102, 104 are very close to each other (the distance corresponding to the total thickness of the hinge member 120, as indicated in Fig. 5a).

In another configuration, as is shown in Fig. 5b, the hinge member 120 is not folded along the first rotational axis R1, but instead along the second and third rotational axis R2, R3.

From above, it is clear that the hinge member 120 comprises a first rotational axis R1 by which the hinge member 120 is rotated in order to position the furniture module 100 in the erected corner shape. The hinge member 120 connects the panels 102, 104 such that the folding sides 112, 114 are arranged in parallel with the first rotational axis R1.

The second rotational axis R2 is arranged in parallel, but spaced apart, from the first rotational axis R1, at a position between the connection element 140 of the hinge member 120 and the first rotational axis R1.

The hinge member 120 thereby forms a first pivot part 122 extending between the first and second rotational axis R1, R2, which first pivot part 122 is allowed to pivot relative the first panel 102.

In a similar manner, the third rotational axis R3 is arranged in parallel, but spaced apart, from the first rotational axis R1, and on an opposite side of the first rotational axis R1 than the second rotational axis R2.

The hinge member 120 thereby forms a second pivot part 124 extending between the first and third rotational axis R1, R3, which second pivot part 124 is allowed to pivot relative the first panel 102.

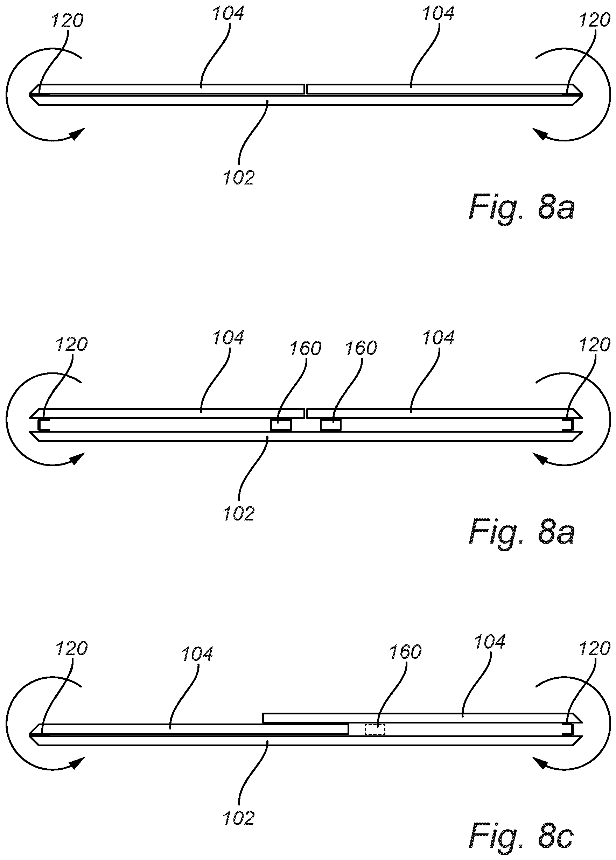

By folding the panels 102, 104 as is shown in Fig. 5b, the first and second pivot parts 122, 124 of the hinge member 120 together form a spacer, which provides for a vertical space V between the panels 102, 104. This vertical space V is advantageous as it allows for compact packaging and storage of furniture modules 100, even if the dimensions of the panels 102, 104 should be non-compatible, as will be further described with reference to Figs. 8a-c.

No turning to Fig. 6a-b, an example of a hinge member 120 is shown. The hinge member 120 is preferably made of plastic, or any other material being capable of providing some robustness to the connection between the panels 102, 104, as well as sufficient flexibility in order to form at least one folding line, or rotational axis R1.

The hinge member 120 has an elongated shape, such that it can be connected to both panels 102, 104 in order to form a pre-manufactured module 100. In the shown example, the hinge member 120 is symmetrical along the rotational axis R1. Each side of the hinge member 120 serves to form a connection with a respective panel 102, 104. For this purpose, each side of the hinge member 120 comprises a connection element 140. A first connection element 140 is provided for attaching the hinge member 120 to the first panel 102, and a second connection element 140 for attaching the hinge member 120 to the second panel 104. Although not necessary, in the shown example the first and second connection elements 140 are identical.

In order to form a robust connection between the hinge member 120 and an associated panel 102, 104, different connection elements can be considered. In the shown example, the connection element 140 comprises a dowel 142, and/or a cylindrical part 144 being spaced apart from the dowel 142. The dowel 142 is preferably provided with external circumferential ribs 143, such that when the dowel 142 is pressed into a mating recess 152 of an associated panel 102, 104, a firm connection is established.

The cylindrical part 144 is preferably formed as a number of separate circumferential segments 145, as is shown in Figs. 6a-b. The provision of such separate segments 145 allows for a radial flexibility of the cylindrical part 144. Also, the cylindrical part may be provided with external circumferential ribs 146, extending across some or all segments 145. The ribs 146 of the cylindrical part 144 ensures a rigid connection with an associated panel 102, 104, when the cylindrical part 144 is inserted into a mating recess 154 of the panel 102, 104.

In the case of the cylindrical part 144, the connection element 140 also comprises a pin 150 being configured to be inserted into the cylindrical part 144. The diameter of the pin 150 is slightly larger than the inner radius of the cylindrical part 144, such that insertion of the pin 150 into the cylindrical part 144 will cause a radial expansion of the cylindrical part 144. By such radial expansion, the circumferential ribs 146 of the cylindrical part 144 will engage with the inner surface of the mating recess 154 of the panel 102, 104, thereby causing a firm connection between the hinge member 120 and the associated panel 102, 104.

It should be realized that for example, the hinge member 120 may be formed integral with one panel 102, 104, thereby only having one connection element 140 for connecting with the second panel 102, 104.

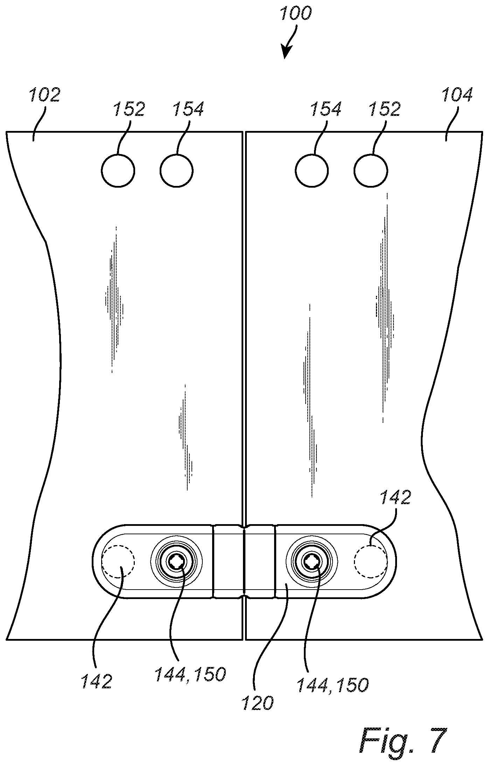

In Fig. 7, a furniture module 100 is shown during pre-assembly. In this embodiment, two hinge members 120 are required to connect the panels 102, 104 to each other. In Fig. 7, only one hinge member 120 is however shown. The first panel 102 is provided with a first area of two recesses 152, 154, and the second panel 104 is provided with the same recesses 152, 154 at a first area. The recesses 152, 154 are positioned relative the folding sides 112, 114 of the panels 102, 104 such that a hinge member 120 can be used to connect the panels 102, 104 to each other.

At a second area, spaced apart from the first area, another set of identical recesses 152, 154 are provided. For these recesses 152, 154, a hinge member 120 has been used to form the connection between the panels 102, 104. The recesses 152, 154 are preferably spaced apart at a distance being selected such that the hinge members 120 form a robust connection of the panels 102, 104 along their entire length. In some embodiments, only one hinge member 120 is required to provide a robust connection of the panels 102, 104. In other embodiments, a plurality of hinge members 120 are used to connect two panels 102, 104, but the hinge members 120 are integrally formed.

Now turning to Figs. 8a-c an advantageous aspect of the furniture module 100 will be described. Through all embodiments, the pre-mounted furniture module 100 comprises three panels 102, 104; a first panel 102, and two side panels 104 connected to a respective folding side of the first panel 102. Each side panel 104 is connected to the first panel 102 by means of one or more hinge members 120.

In Fig. 8a, showing the folded position of the panels 102, 104, each hinge member 120 is folded by its first rotational axis R1, i.e. in accordance with what has been discussed with respect to Fig. 5a. This is possible as long as the total length of the side panels 104 does not exceed the length of the first panel 102.

In Fig. 8b, also showing the folded position of the panels 102, 104, each hinge member 120 is instead folded by its second and third rotational axis R2, R3, i.e. in accordance with what has been discussed with respect to Fig. 5b. To balance the side panels 104, blocks 160 are inserted between the first panel 102 and the side panels 104. A void is thereby formed between the panels 102, 104, which can be used to store other components used to assemble the piece of furniture (such as screws, brackets, etc.). Also this folding configuration is possible as long as the total length of the side panels 104 does not exceed the length of the first panel 102.

In Fig. 8c, the hinge members 120 used to connect one side panel 104 are folded along the first rotational axis R1, while the hinge members 120 used to connect the other side panel 104 are folded along the second and third rotational axis R2, R3. This configuration is particularly advantageous when the total length of the two side panels 104 exceeds the length of the first panel 102. The total height of the first and second pivot parts 122, 124 (see Fig. 5b), forming the vertical distance V, is preferably designed to correspond to the thickness of the other side panel 104. Both side panels 104 can thereby be arranged in a planar, and parallel, configuration. As is also shown in Fig. 8c, one or more blocks 160 may be arranged in the vertical distance V between side panel 103 and the first panel 102, in order to support the side panel 104 and to urge folding along the second and third rotational axis R2, R3.

## Claims

1. A furniture module for forming part of a piece of furniture, comprising a first panel (102), a second panel (104), and at least one hinge member (120) having at least one connection element (140), whereby the hinge member (120) is arranged to be attached to at least one of the panels (102, 104) by means of said connection element (140), wherein
the hinge member (120) is configured to allow the first and second panels (102, 104) to be folded relative each other by 250-270°, such as approximately 270°, between a folded, and flat, shape, and an erected corner shape, wherein the hinge member (120) is arranged on the exterior side of the corner shape, and wherein chamfered folding sides (112, 114) of the panels (102, 104) come into contact with each other, thereby forming a perpendicular configuration of the panels (102, 104).

2. The furniture module according to claim 1, wherein the at least one connection element (14) comprises a first connection element (140) for attaching the hinge member (120) to the first panel (102), and a second connection element (140) for attaching the hinge member (120) to the second panel (104).

3. The furniture module according to claim 2, wherein the first and second connection elements (140) are identical.

4. The furniture module according to any of the preceding claims, wherein the connection element (140) comprises a dowel (142) to be pressed into a mating recess (152) of the panel (102, 104).

5. The furniture module according to any of the preceding claims, wherein the connection element (140) comprises a cylindrical part (144) to be positioned into a mating recess (154) of the panel (102, 104), which cylindrical part (144) being radially expandable, optionally wherein the connection element (140) further comprises a pin (150) being configured to be inserted into said cylindrical part (144) in order to radially expand said cylindrical part (144).

6. The furniture module according to any of the preceding claims, wherein the hinge member (120) comprises a first rotational axis (R1) by which the hinge member (120) is rotated in order to position the furniture module (100) in the erected corner shape, optionally wherein the hinge member (120) is arranged to connect the panels (102, 104) such that a folding side (112) of the first panel (102) is arrangeable adjacent to a folding side (114) of the second panel (104), and wherein the first rotational axis (R1) is arrangeable in parallel with the folding sides (112, 114) of the panels (102, 104) at a position where the folding sides (112, 114) meet.

7. The furniture module according to any one of the preceding claims, wherein the chamfered folding sides (112, 114) are provided with a support means (116).

8. The furniture module according claim 6, wherein the hinge member (120) comprises a second rotational axis (R2) arranged in parallel, but spaced apart, from the first rotational axis (R1).

9. The furniture module according to claim 8, wherein the second rotational axis (R2) is arranged in between the connection element (140) and the first rotational axis (R1).

10. The furniture module according to claim 9, wherein the hinge member (120) comprises a first pivot part (122) extending between the first and second rotational axis (R1, R2), which first pivot part (122) is allowed to pivot relative the first panel (102).

11. The furniture module according to any of claims 8-10, wherein the hinge member (120) further comprises a third rotational axis (R3) arranged in parallel, but spaced apart, from the first rotational axis (R1), and on an opposite side of the first rotational axis (R1) than the second rotational axis (R2).

12. The furniture module according to claim 11, wherein the hinge member (120) comprises a second pivot part (124) extending between the first and third rotational axis (R1, R3), which second pivot part (124) is allowed to pivot relative the second panel (104), and/or wherein the hinge member (120) is made of plastic.

13. The furniture module according to any of the preceding claims, comprising at least two hinge members (120) connecting the first panel (102) to the second panel (104), and/or wherein the furniture module further comprising a third panel (104), and at least one hinge member (120) connecting said third panel (104) to the first panel (102) or the second panel (104).

14. The furniture module according to any of the preceding claims, wherein the first panel (102) is a back panel of a drawer (D), and the second panel (104) is a side panel of the drawer (D).

15. A piece of furniture, such as a drawer (D), comprising a furniture module (100) according to any of the preceding claims.

## Patentansprüche

1. Möbelmodul zum Bilden eines Teil eines Möbelstücks, umfassend
eine erste Platte (102), eine zweite Platte (104) und mindestens ein Scharnierelement (120), das mindestens ein Verbindungselement (140) aufweist, wobei das Scharnierelement (120) konfiguriert ist, um an mindestens einer der Platten (102, 104) mittels des Verbindungselements (140) befestigt zu werden,
wobei das Scharnierelement (120) so konfiguriert ist, dass es ermöglicht, dass die erste und die zweite Platte (102, 104) relativ zueinander um 250°-270°, wie etwa 270°, zwischen einer gefalteten Form, einer flachen Form und einer aufgerichteten Eckform gefaltet werden können, wobei das Scharnierelement (120) an der Außenseite der Eckform angeordnet ist, und wobei abgeschrägte Faltseiten (112, 114) der Platten (102, 104) miteinander in Kontakt kommen, wodurch eine senkrechte Konfiguration der Platten (102, 104) gebildet wird.

2. Möbelmodul nach Anspruch 1, wobei das mindestens eine Verbindungselement (14) ein erstes Verbindungselement (140) zum Befestigen des Scharnierelements (120) an der ersten Platte (102) und ein zweites Verbindungselement (140) zur Befestigung des Scharnierelements (120) an der zweiten Platte (104) umfasst.

3. Möbelmodul nach Anspruch 2, wobei die ersten und zweiten Verbindungselemente (140) identisch sind.

4. Möbelmodul nach einem der vorhergehenden Ansprüche, wobei das Verbindungselement (140) einen Dübel (142) zum Einpressen in eine Gegenausnehmung (152) der Platte (102, 104) aufweist.

5. Möbelmodul nach einem der vorhergehenden Ansprüche, wobei das Verbindungselement (140) einen zylindrischen Teil (144) aufweist, der in einer Gegenausnehmung (154) der Platte (102, 104) zu positionieren ist, wobei der zylindrische Teil (144) in radialer Richtung ausdehnbar ist, wobei optional das Verbindungselement (140) weiterhin einen Stift (150) umfasst, der so konfiguriert ist, dass er in den zylindrischen Teil (144) eingeführt werden kann, um den zylindrischen Teil (144) radial zu erweitern.

6. Das Möbelmodul nach einem der vorhergehenden Ansprüche, wobei das Scharnierelement (120) eine erste Drehachse (R1) aufweist, um die das Scharnierelement (120) gedreht wird, um das Möbelmodul (100) in der aufgerichteten Eckform zu positionieren, wobei optional das Scharnierelement (120) so angeordnet ist, dass es die Platten (102, 104) miteinander verbindet, so dass eine Faltseite (112) der ersten Platte (102) benachbart zu einer Faltseite (114) der zweiten Platte (104) angeordnet werden kann, und wobei die erste Drehachse (R1) parallel zu den Faltseiten (112, 114) der Platten (102, 104) an einer Stelle angeordnet werden kann, an der sich die Faltseiten (112, 114) treffen.

7. Möbelmodul nach einem der vorhergehenden Ansprüche, wobei die abgeschrägten Faltseiten (112, 114) mit einem Stützmittel (116) versehen sind.

8. Möbelmodul nach Anspruch 6, wobei das Scharnierelement (120) eine zweite Drehachse (R2) aufweist, die parallel zu, aber beabstandet von der ersten Drehachse (R1) angeordnet ist.

9. Möbelmodul nach Anspruch 8, wobei die zweite Drehachse (R2) zwischen dem Verbindungselement (140) und der ersten Drehachse (R1) angeordnet ist.

10. Möbelmodul nach Anspruch 9, wobei das Scharnierelement (120) ein erstes Drehteil (122) aufweist, das sich zwischen der ersten und zweiten Drehachse (R1, R2) erstreckt, wobei das erste Drehteil (122) relativ zu der ersten Platte (102) schwenken kann.

11. Möbelmodul nach einem der Ansprüche 8-10, wobei das Scharnierelement (120) ferner eine dritte Drehachse (R3) aufweist, die parallel zu, aber beabstandet von der ersten Drehachse (R1) und auf einer gegenüberliegenden Seite der ersten Drehachse (R1) als die zweite Drehachse (R2) angeordnet ist.

12. Möbelmodul nach Anspruch 11, wobei das Scharnierelement (120) ein zweites Drehteil (124) aufweist, das sich zwischen der ersten und dritten Drehachse (R1, R3) erstreckt, wobei das zweite Drehteil (124) relativ zu der zweiten Platte (104) schwenken kann, und/oder wobei das Scharnierelement (120) aus Kunststoff hergestellt ist.

13. Möbelmodul nach einem der vorhergehenden Ansprüche, umfassend mindestens zwei Scharnierelemente (120), die die erste Platte (102) mit der zweiten Platte (104) verbinden, und/oder wobei das Möbelmodul ferner eine dritte Platte (104) umfasst, und mindestens ein Scharnierelement (120), das die dritte Platte (104) mit der ersten Platte (102) oder der zweiten Platte (104) verbindet.

14. Möbelmodul nach einem der vorhergehenden Ansprüche, wobei die erste Platte (102) eine Rückwand einer Schublade (D) ist und die zweite Platte (104) eine Seitenwand der Schublade (D) ist.

15. Möbelstück, wie etwa eine Schublade (D), umfassend ein Möbelmodul (100) nach einem der vorhergehenden Ansprüche.

## Revendications

1. Module de meuble destiné à faire partie d'une pièce de meuble, comprenant un premier panneau (102), un deuxième panneau (104), et au moins un élément charnière (120) comportant au moins un élément de connexion (140), ce par quoi l'élément charnière (120) est conçu pour être fixé à au moins l'un des panneaux (102, 104) au moyen dudit élément de connexion (140), dans lequel
l'élément charnière (120) est configuré pour permettre de plier, l'un par rapport à l'autre, les premier et deuxième panneaux (102, 104) de 250 à 270°, comme environ 270°, entre une forme pliée et plate, et une forme de coin érigée, dans lequel l'élément charnière (120) est disposé du côté extérieur de la forme de coin, et dans lequel des côtés de pliage chanfreinés (112, 114) des panneaux (102, 104) viennent en contact l'un avec l'autre, formant ainsi une configuration perpendiculaire des panneaux (102, 104).

2. Module de meuble selon la revendication 1, dans lequel l'au moins un élément de connexion (14) comprend un premier élément de connexion (140) destiné à fixer l'élément charnière (120) au premier panneau (102), et un second élément de connexion (140) destiné à fixer l'élément charnière (120) au deuxième panneau (104).

3. Module de meuble selon la revendication 2, dans lequel les premier et second éléments de connexion (140) sont identiques.

4. Module de meuble selon l'une quelconque des revendications précédentes, dans lequel l'élément de connexion (140) comprend un goujon (142) à presser dans un évidement d'accouplement (152) du panneau (102, 104).

5. Module de meuble selon l'une quelconque des revendications précédentes, dans lequel l'élément de connexion (140) comprend une partie cylindrique (144) à positionner dans un évidement d'accouplement (154) du panneau (102, 104), laquelle partie cylindrique (144) pouvant se déployer radialement, dans lequel l'élément de connexion (140) comprend en outre éventuellement une broche (150) configurée pour être introduite dans ladite partie cylindrique (144) afin de déployer radialement ladite partie cylindrique (144).

6. Module de meuble selon l'une quelconque des revendications précédentes, dans lequel l'élément charnière (120) comprend un premier axe de rotation (R1) autour duquel l'élément charnière (120) pivote afin de positionner le module de meuble (100) dans la forme de coin érigée, dans lequel l'élément charnière (120) est éventuellement conçu pour connecter les panneaux (102, 104) de sorte qu'un côté de pliage (112) du premier panneau (102) puisse être disposé adjacent à un côté de pliage (114) du deuxième panneau (104), et dans lequel le premier axe de rotation (R1) peut être disposé parallèlement au côté de pliage (112, 114) des panneaux (102, 104) à une position au niveau de laquelle se rencontrent les côtés de pliage (112, 114).

7. Module de meuble selon l'une quelconque des revendications précédentes, dans lequel les côtés de pliage chanfreinés (112, 114) sont pourvus d'un moyen de support (116) .

8. Module de meuble selon la revendication 6, dans lequel l'élément charnière (120) comprend un deuxième axe de rotation (R2) disposé parallèlement au premier axe de rotation (R1), mais espacé de ce dernier.

9. Module de meuble selon la revendication 8, dans lequel le deuxième axe de rotation (R2) est disposé entre l'élément de connexion (140) et le premier axe de rotation (R1) .

10. Module de meuble selon la revendication 9, dans lequel l'élément charnière (120) comprend une première partie pivot (122) s'étendant entre les premier et deuxième axes de rotation (R1, R2), laquelle première partie pivot (122) peut pivoter par rapport au premier panneau (102).

11. Module de meuble selon l'une quelconque des revendications 8 à 10, dans lequel l'élément charnière (120) comprend en outre un troisième axe de rotation (R3) disposé parallèlement au premier axe de rotation (R1), mais espacé de ce dernier, et sur un côté opposé du premier axe de rotation (R1) par rapport au deuxième axe de rotation (R2) .

12. Module de meuble selon la revendication 11, dans lequel l'élément charnière (120) comprend une seconde partie pivot (124) s'étendant entre les premier et troisième axes de rotation (R1, R3), laquelle seconde partie pivot (124) peut pivoter par rapport au deuxième panneau (104), et /ou dans lequel l'élément charnière (120) est constitué de plastique.

13. Module de meuble selon l'une quelconque des revendications précédentes, comprenant au moins deux éléments charnières (120) connectant le premier panneau (102) au deuxième panneau (104), et/ou dans lequel le module de meuble comprend en outre un troisième panneau (104), et au moins un élément charnière (120) connectant ledit troisième panneau (104) au premier panneau (102) ou au deuxième panneau (104).

14. Module de meuble selon l'une quelconque des revendications précédentes, dans lequel le premier panneau (102) est un panneau arrière d'un tiroir (D), et le deuxième panneau (104) est un panneau latéral du tiroir (D) .

15. Pièce de meuble, telle qu'un tiroir (D), comprenant un module de meuble (100) selon l'une quelconque des revendications précédentes.
